# EUROPÄISCHE PATENTSCHRIFT

(11) **EP 1 570 309 B1**
(45) Veröffentlichungstag und Bekanntmachung des Hinweises auf die Patenterteilung: **20.08.2008**
(21) Anmeldenummer: 03812596.9
(22) Anmeldetag: 10.12.2003
(51) Int. Cl.: G02C 7/02

(54) **VERFAHREN ZUR HERSTELLUNG EINES BRILLENGLASPAARES**
METHOD OF PRODUCING A PAIR OF SPECTACLE LENSES
PROCEDE DE FABRICATION D'UNE PAIRE DE VERRES POUR LUNETTES

(30) Priorität: 12.12.2002 DE 10258332
(43) Veröffentlichungstag der Anmeldung: 07.09.2005
(73) Patentinhaber: Rodenstock GmbH, 80469 München (DE)
(72) Erfinder: ESSER, Gregor, 81735 München (DE); ALTHEIMER, Helmut, 87650 Baisweil-Lauchdorf (DE); HAIMERL, Walter Dr., 80337 München (DE); WEHNER, Edda Dr., 82275 Emmering (DE); WELK, Andrea, 81547 München (DE)
(74) Vertreter: Müller-Boré & Partner Patentanwälte
(86) Internationale Anmeldenummer: PCT/EP2003/014017
(87) Internationale Veröffentlichungsnummer: WO 2004/053566

(56) Entgegenhaltungen:
- EP-A- 0 772 066
- DE-A- 4 414 106
- US-A- 5 574 518
- US-A1- 2001 033 363

## Beschreibung

### Technisches Gebiet

Die Erfindung bezieht sich auf ein Verfahren zur Herstellung eines Brillenglaspaares.

Insbesondere bei Progressivgläsern ist es wichtig, ein möglichst gutes Binokularsehen zu erzielen, da die Abbildungsfehler in der Peripherie stark zunehmen.

Bei Progressivgläsern vom Stand der Technik, wobei hier insbesondere auf die EP 0 944 375 von Essilor, auf die WO 01/84213 von Rodenstock und auf die US 4,606,622 von Zeiss verwiesen wird, wird versucht, dies zu erreichen, indem die Abbildungsfehler in der Peripherie beim rechten und linken Brillenglas in den korrespondierenden Durchblickstellen möglichst gleich gestaltet werden. Dies hat zur Folge, dass das rechte und das linke Auge beim Betrachten eines Objekts die gleichen Abbildungsfehler hat.

Dadurch können binokulare Parameter wie z. B. Aniseikonie, Verzerrungsunterschiede, querdisparates Tiefensehen etc. positiv beeinflußt werden.

Es ist bekannt (vgl. Wörterbuch der Optometrie, Helmut Goersch, Enke Verlag, S. 19S), dass die binokulare Sehschärfe bzw. der binokulare Visus in der Regel größer ist als die maximale Sehschärfe des Einzelauges:
Visus_{binokular} > max (Visus _{R}, Visus _{L}).

DE 44 14 106 A offenbart ein Paar von Gleitsichtlinsen, wobei jede Linse eine sphärische Oberfläche mit einer Fernsichtzone, einer Nahsichtzone und einer Mittelsichtzone aufweist und wobei eine der Gleitsichtlinsen für die Fernsicht und die andere der Gleitsichtlinsen für die Nahsicht optimiert ist.

DE A 375491 offenbart ein Augenglaspaar, das die Wirkung von Nah- und Fernteil auf beide Augen verteilt, anstatt - wie bei einem Mehrstärkenglas - die beiden Sehaufgaben in einem Glas zu vereinen. Für die beiden Augen werden Gläser verwendet, die zwar von verschiedener Brechkraft sind, aber gleiche Ablenkung der Hauptstrahlen ergeben. Des weiteren offenbart diese Veröffentlichung die Kombination aus einem Mehrstärkenglas und einem Einstärkenglas, sowie die Kombination aus zwei Mehrstärkengläsern, wobei das eine Glas vorwiegend für die Nähe, das andere Glas vorwiegend für die Ferne ausgelegt ist.

Es ist Aufgabe der vorliegenden Erfindung, die eingeschränkte Sicht, die sich aus den charakteristischen Abbildungsfehlern in der Peripherie progressiver Brillengläser ergibt, zu verbessern.

Die Aufgabe wird gelöst durch das Verfahren zur Herstellung eines Brillenglaspaars gemäß Anspruch 1.

Eine bevorzugte Ausführungsform ist Gegenstand des abhängigen Anspruchs 2.

Gemäß eines Ausführungsform, welche wicht Gegenstand der Ansprüche ist, sind beide Brillengläser Progressivgläser, wobei das eine Brillenglas für die Ferne optimiert und das andere Brillenglas für die Nähe optimiert wird. Bei einem Glas wird der Nahwert abgeschwächt und bei dem anderen Glas der Fernwert verstärkt.

Zunächst wird die Hauptsehaufgabe bestimmt. Als nächstes wird das Führungsauge bestimmt und danach wird ein Brillenglaspaar berechnet.

Die Erfindung wird nachstehend ohne Beschränkung des allgemeinen Erfindungsgedankens anhand von Ausführungsbeispielen unter Bezugnahme auf die Zeichnungen exemplarisch beschrieben, auf die im übrigen hinsichtlich der Offenbarung aller im Text nicht näher erläuterten erfindungsgemäßen Einzelheiten ausdrücklich verwiesen wird. Es zeigen:

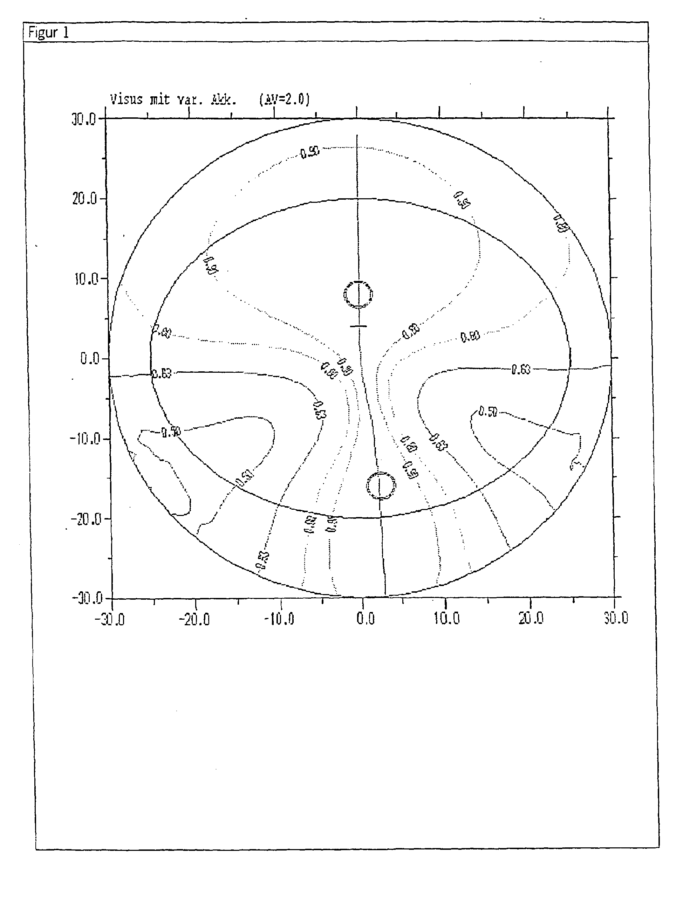

Fig. 1 ein konventionelles Progressivglas, bei dem rechts und links das gleiche Progressivglas verwendet wurde,
Fig. 2 ein Progressivglas mit R sph - 4,0 dpt Add 1,5 dpt,
Fig. 3 ein Progressivglas mit L sph - 3,5 dpt Add 1,5 dpt,

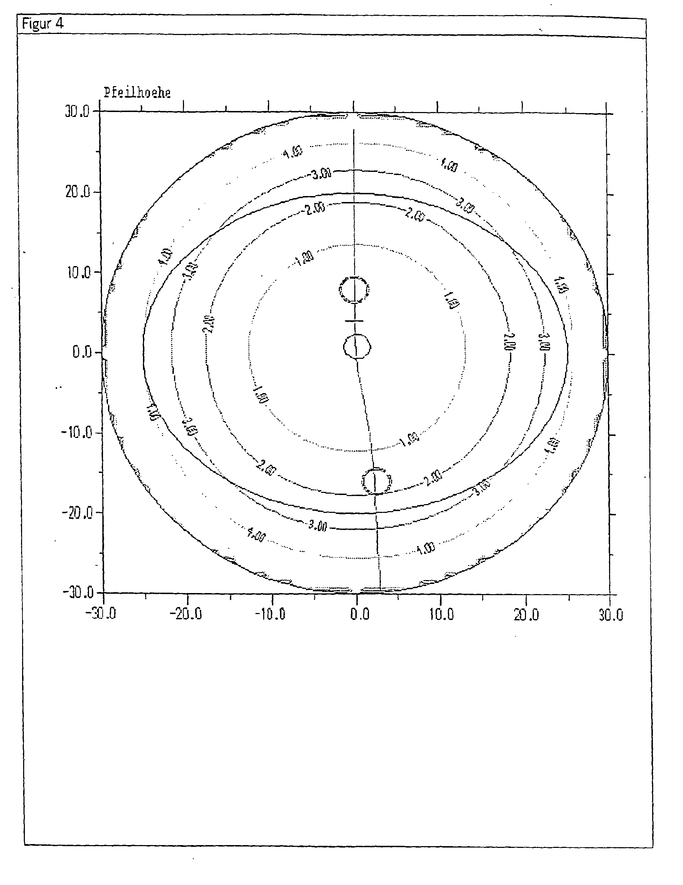

Fig. 4 die Pfeilhöhen vom rechten Glas von Fig. 2 und

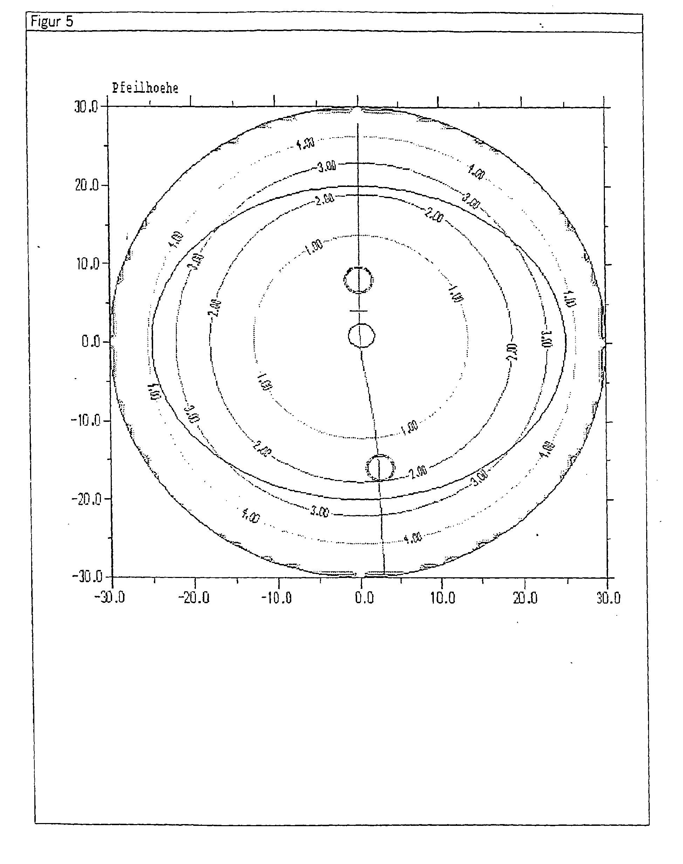

Fig. 5 die Pfeilhöhen vom linken Glas von Fig. 3.

Wie bereits erwähnt, wird zur Bestimmung eines Brillenglaspaares zunächst die Hauptsehaufgabe bestimmt, dann das Führungsauge bestimmt und danach das Brillenglaspaar berechnet. Im Folgenden wird ein Beispiel angegeben:
Das Führungsauge ist rechts, die Hauptsehaufgabe ist die Ferne und die Verordnung ist R/L sph - 4 dpt Add 2,0 dpt.

Somit erhält man für an Brillenglaspaar, welchs micht von des Eifindung unfast ist, rechts ein Einstärkenglas mit der Wirkung sph - 4 dpt und links ein Einstärkenglas mit sph - 2 dpt. Solch ein Brillenglaspaar weist zwar keine optimalen binokularen Eigenschaften auf, allerdings ist die binokulare Sehschärfe in allen Durchblickpunkten sehr hoch und somit sind die binokularen Sehfelder sehr groß. Selbstverständlich ist dies auch auf rechts und links unterschiedliche Verordnungen oder auf von Ferne bzw. Nähe abweichende Sehaufgaben wie z. B. bei Computer- oder Arbeitsplatzbrillen anwendbar.

Die binokularen Sehfelder sind bei einem solchen Brillenglaspaar mit zwei Einstärkengläsern nicht beschränkt, da bei jeweils einem Brillenglas die Sehschärfe immer optimal (entweder für Ferne oder Nähe) ist. Allerdings sind dann die restlichen binokularen Abbildungsparameter stärker eingeschränkt.

Es ist bekannt, daß bei Progressivgläsern die Abbildungsfehler in der Peripherie störend sind. Dies läßt sich mit einer Ausführungsform nach der Erfindung beheben.

Da bei zwei Einstärkenbrillengläsern das Binokularsehen stark eingeschränkt wird, wählt man deshalb auf der einen Seite ein Progressivglas und auf der anderen Seite ein Einstärkenglas. Das Rezept ist das gleiche, wie oben angegeben wurde. Somit würde man wählen: R Progressivglas sph - 4 dpt Add 2,0; L Einstärkenglas sph - 4 dpt. Somit ist in der Ferne das binokulare Sehfeld unbeschränkt und mit dem Nah - und Zwischenbereich ist es dennoch noch möglich, beispielsweise eine Speisekarte zu lesen. Soll also ein uneingeschränktes Fernblickfeld zur Verfügung gestellt werden und nur kurzzeitig Leseaufgaben übernommen werden, findet man mit solch einem Brillenglaspaar die ideale Lösung.

Selbstverständlich sind auch hier alle denkbaren Kombinationen möglich. Liegt die Hauptsehaufgabe im Nahbereich, so wählt man auf der linken Seite ein Nahglas oder falls man der Hauptsehaufgabe noch mehr Bedeutung beimessen möchte, kann man auch das Führungsauge mit einem Einstärkenglas und das andere mit einem Progressivglas versehen.

Eine weitere Möglichkeit besteht in der Versorgung mit zwei Progressivgläsern. Hierbei wird ein Brillenglas für die Ferne und ein Brillenglas für die Nähe optimiert. Somit erhält man bei einem Progressivglas einen großen Fernbereich und bei dem anderen einen großen Nahbereich. Dies hat zur Folge, dass die binokularen Sehbereiche dann sowohl in der Ferne als auch in der Nähe sehr groß sind.

Dies kann noch verstärkt werden, indem man bei einem Progressivglas den Nahwert abschwächt (weniger Plus) und/oder bei dem anderen Progressivglas den Fernwert verstärkt, d. h. in Richtung Plus verändert. Dadurch wird der Progressionskanal sowohl monokular als auch binokular verbreitert.

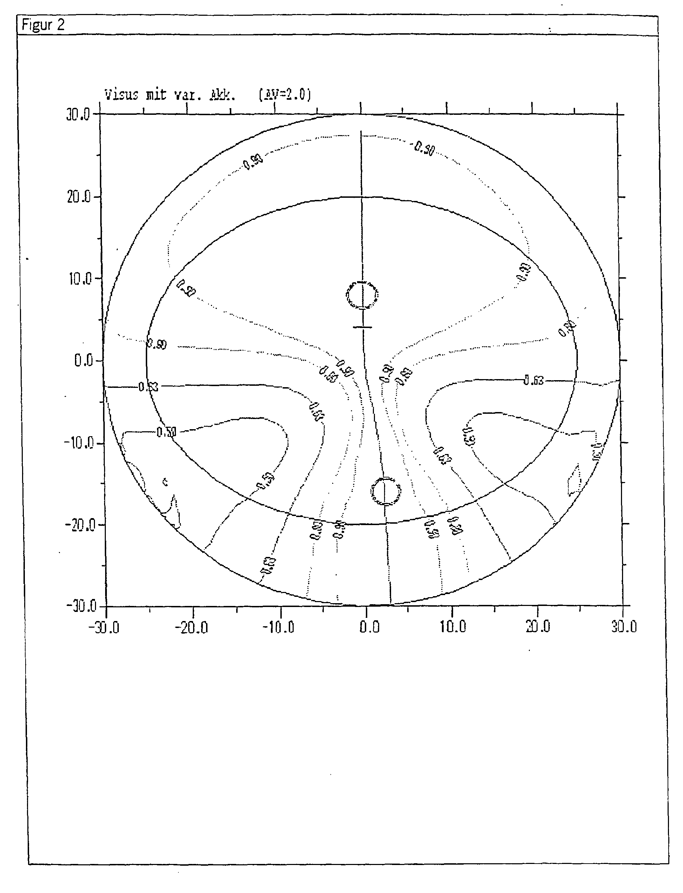

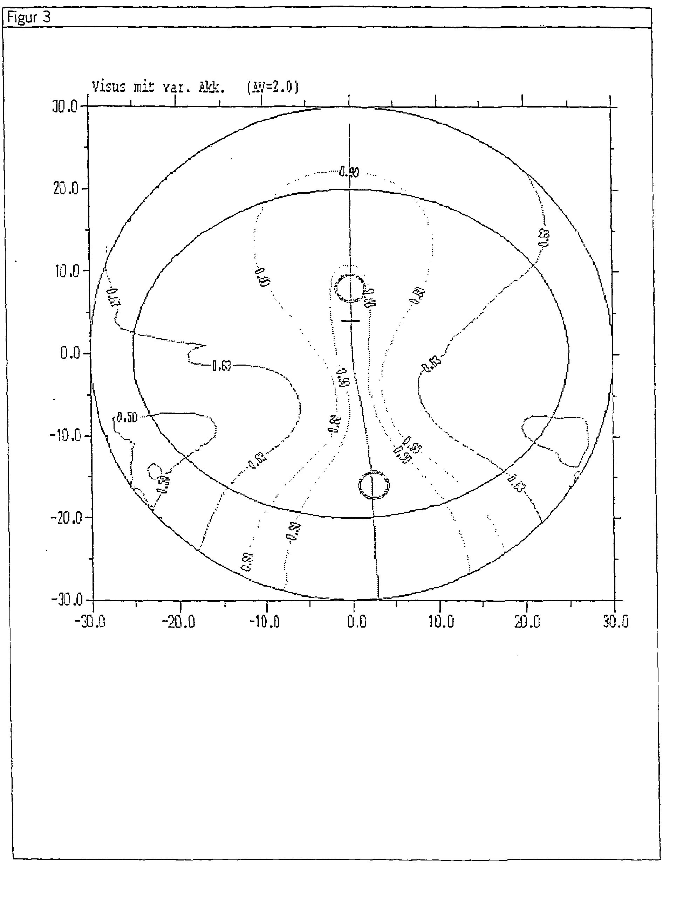

Dieses Beispiel wird in den Fig. 2 und 3 beschrieben. Man verwendet folgendes Rezept:
R/L sph - 4,0 dpt Add 2,0 dpt,
Führungsauge rechts, Hauptsehaufgabe Ferne.

Für das rechte Brillenglas wird ein Progressivglas mit optimalem Fernbereich und einer Wirkung sph - 4,0 Add 1,5 und für das linke Brillenglas ein Progressivglas mit optimalem Nahbereich und einer Wirkung sph - 3,5 Add 1,5 berechnet. Somit erhält man ein Brillenglaspaar, bei dem die binokularen Sehbereiche sowohl in der Ferne als auch in der Nähe und im Progressionsbereich deutlich vergrößert sind. In Abhängigkeit von der Größe der Sehfelder oder des Binokularsehens kann man die Verstärkung bzw. die Abschwächung im Fern- und Nahbereich (im Beispiel 0,5 dpt) und die Bevorzugung bei der Berechnung Ferne bzw. Nähe frei wählen. Die Verstärkung bzw. die Abschwächung muss dabei nicht notwendigerweise um den selben Betrag erfolgen. In der Tabelle 1 sind die Sehfeldbreiten (Visus > 0,9) dargestellt.

**Tabelle 1 Sehfeldbreiten (Visus > 0,9)**

| | Konventionelles Progressivglas | Erfindung R | Erfindung L | **Erfindung Binokular** |
|---|---|---|---|---|
| Ferne (Fernbezugspunkt) | 26,8 mm | 37 mm | 4,3 mm | 37 mm |
| Progressionskanal (engste Stelle) | 2,2 mm | 2,4 mm | 2,4 mm | 2,4 mm |
| Nähe (Nahbezugspunkt) | 9,5 mm | 7,3 mm | 13,4 mm | 13,4 mm |

Beim Brillenglaspaar ist der Sehbereich in der Ferne um 38 %, im Zwischenbereich um 9 % und im Nahbereich um 41% vergrößert.

## Patentansprüche

1. Verfahren zur Herstellung eines Brillenglaspaares mit den Schritten:
- Bestimmen einer Hauptsehaufgabe;
- Bestimmen eines Führungsauges;
- Berechnen eines Brillenglaspaares, wobei
-- das Führungsauge mit einem Einstärkenbrillenglas entsprechend der Hauptsehaufgabe und das andere Auge mit einem Progressivbrillenglas ausgestattet ist; oder
-- das Führungsauge mit einem Progressivbrillenglas und das andere Auge mit einem Einstärkenbrillenglas entsprechend der Hauptsehaufgabe ausgestattet ist, derart, daß
das binokulare Sehfeld der Hauptsehaufgabe gegenüber dem Sehfeld des progressiven Brillenglases vergrößert ist.

2. Verfahren nach Anspruch 1, **dadurch gekennzeichnet, daß** das Brillenglaspaar derart berechnet wird, daß das binokulare Sehfeld der Hauptsehaufgabe unbeschränkt ist.

## Claims

1. Method for producing a pair of spectacle lenses with the steps:
• determining a main viewing task;
• determining a guiding eye;
• calculating a pair of spectacle lenses, wherein
■ the guiding eye is fitted with a univocal spectacle lens in accordance with the main viewing task and the other eye is fitted with a progressive spectacle lens; or
■ the guiding eye is fitted with a progressive spectacle lens and the other eye is fitted with a univocal spectacle lens in accordance with the main viewing task, in such a way that
the binocular viewing field of the main viewing task is magnified in relation to the viewing field of the progressive spectacle lens.

2. Method according to claim 1, **characterised in that** the pair of spectacle lenses is calculated in such a way that the binocular viewing field of the main viewing task is unrestricted.

## Revendications

1. Procédé en vue de la fabrication d'une paire de verres de lunette avec les étapes suivantes :
- détermination de l'objet de vision principal ;
- détermination d'un oeil de guidage ;
- calcul d'une paire de verres de lunette dans lequel,
- l'oeil de guidage étant pourvu, conformément à l'objet de vision principal, d'un verre de lunette à puissance unique et l'autre oeil étant pourvu d'un verre de lunette progressif; ou
- l'oeil de guidage étant pourvu d'un verre de lunette progressif et l'autre oeil étant pourvu, conformément à l'objet de vision principal, d'un verre de lunette à puissance unique, de telle sorte que
le champ de vision binoculaire de l'objet de vision principal est agrandi par rapport au champ de vision du verre de lunette progressif.

2. Procédé selon la revendication 1, **caractérisé en ce que** la paire de verres de lunette est calculée de telle sorte que le champ de vision binoculaire de l'objet de vision principal est non limité.
